# EUROPEAN PATENT SPECIFICATION

(11) **EP 1 443 246 B1**
(45) Date of publication and mention of the grant of the patent: **03.12.2008**
(21) Application number: 04000873.2
(22) Date of filing: 16.01.2004
(51) Int. Cl.: F16H 9/00

(54) **Continuously variable transmission**
Stufenloses Umschlingungsgetriebe
Transmission à variation continue

(30) Priority: 31.01.2003 JP 2003024445
(43) Date of publication of application: 04.08.2004
(73) Proprietor: Yamaha Hatsudoki Kabushiki Kaisha, Iwata-shi, Shizuoka-ken (JP)
(72) Inventor: Murayama, Takuji, Iwata-shi Shizuoka-ken (JP)
(74) Representative: Grünecker, Kinkeldey, Stockmair & Schwanhäusser Anwaltssozietät

(56) References cited:
- FR-A- 2 502 720
- US-A- 4 629 444
- US-A- 5 976 044
- PATENT ABSTRACTS OF JAPAN vol. 2000, no. 03, 30 March 2000 (2000-03-30) & JP 11 334393 A (YAMAHA MOTOR CO LTD), 7 December 1999 (1999-12-07)

## Description

The present invention relates to a continuously variable transmission having a V-belt wound around a drive pulley and a driven pulley. Such a continuously variable transmission is usable, for example, for a scooter type motorcycle or the like.

US 5976044 A discloses a continuously variable transmission according to the preamble of claim 1.

In order to prevent abnormal increase in temperature of a V-belt of such a continuously variable transmission, the V-belt is cooled by flowing cooling air, which is introduced into a transmission case, from a drive pulley side to a driven pulley side.

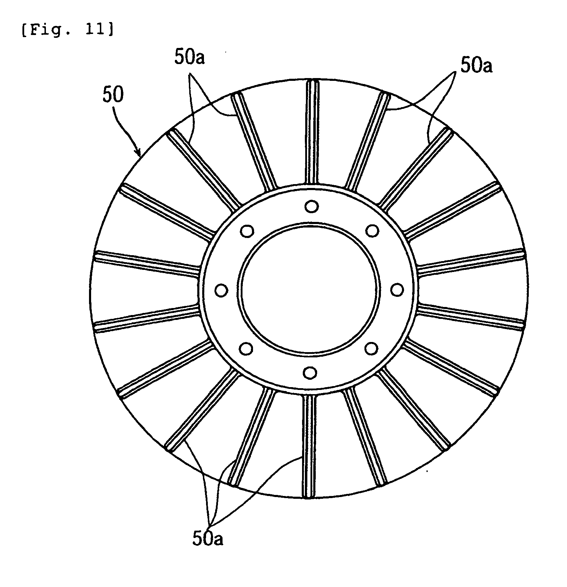

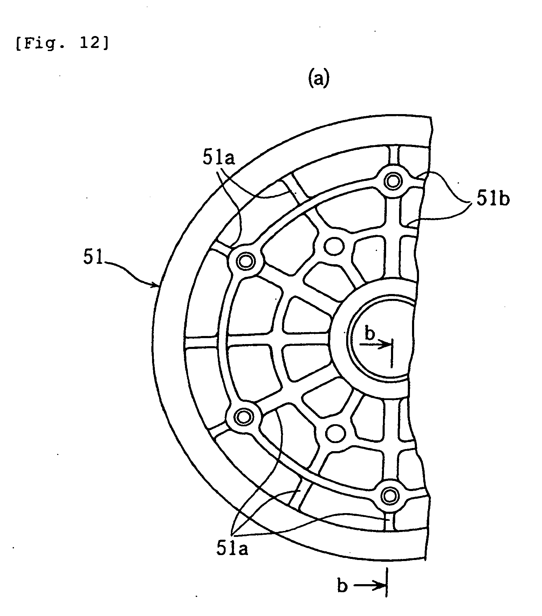

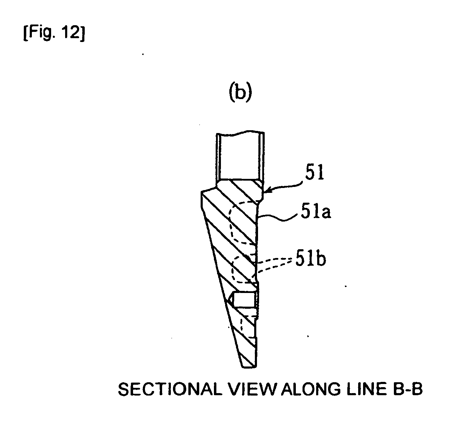

On the other hand, in the V-belt type continuously variable transmission of this type, from the viewpoint of increasing rigidity of a pulley half body of the driven pulley, as shown in Fig. 11, conventionally, ribs 50a, which extend radially in a radial direction, may be formed on an external side of a pulley half body 50 or, as shown in Figs. 12A and 12B, ribs 51a, which extend radially in a radial direction, and ribs 51b, which extend in a circumferential direction, may be formed on an external side of a pulley half body 51 as e.g. known from JP-A-11-334393.

However, in the case in which a structure forming ribs, which extend radially in a radial direction, on a pulley half body is adopted as in the conventional example, the ribs may agitate the air in accordance with rotation of the pulley half body to disturb a flow of cooling air introduced into a transmission case. Thus, there is concern that a cooling effect for a V belt cannot be obtained sufficiently.

It is, therefore, an object of the present invention to provide a continuously variable transmission which can increase the cooling effect for the V-belt.

For a continuously variable transmission of the above kind, this object is solved in an inventive manner by means of a CVT according to claim 1.

Circular continuous recesses are formed in substantially concentric circles between said radiation fins on the external surface of the driven pulley. Thereby, the above effects are even improved.

According to a preferred embodiment, said radiation fins extend parallel to one another in an axial direction on the external surface of a side opposite to a V belt winding surface of the driven pulley.

In particular, at least one of the radiation fins is formed in a part of the driven pulley facing a top position where a winding diameter of the V belt is the minimum.

Since at least one of the radiation fins is formed in the part facing the top position of the V-belt, generated heat in the top position part, where a heat load is the largest, can be radiated through the at least one radiation fin, and a radiation property of the pulley half body can be improved.

Moreover, the radiation fins are formed concentrically to one another between a radially outermost low position, where a winding diameter of the V-belt is the maximum, and a radially innermost top position, where a winding diameter of the V-belt is the minimum.

Since the radiation fins are formed extending from the low position to the top position, a radiation property of the pulley half body can be improved in all operation ranges from an idling state to a maximum speed state, and the V belt can be cooled efficiently.

Preferably, an axial extension or height of the radiation fins is larger the closer the radiation fins are located to the top position side.

Since the radiation fins are made larger the closer to the top position side the radiation fins are situated, the generated heat from the top position part, where a heat load is large, can be radiated efficiently.

According to a further embodiment, a centrifugal clutch is mounted on a movable pulley half body side of the driven pulley on the driven shaft so as to be adjacent thereto, and an outer end face of the radiation fins is formed so as to substantially coincide with an inner end face of an outer drum of the centrifugal clutch or to be located in the outer drum when the movable pulley half body has moved to a top position.

Since the outer end face of the radiation fin is adapted to substantially coincide with the inner end face of the outer drum of the centrifugal clutch or to be located on the inside of the outer drum when the movable pulley half body has move to the top position, the radiation fins can be formed high to increase a surface area thereof without interference with the outer drum, and a radiation property can also be improved from this point.

Moreover, said drive pulley is mounted to a drive shaft located on an engine side in a transmission case, and said driven pulley is mounted to a driven shaft located on a rear wheel side, wherein cooling air introduced into the transmission case is directed from the drive pulley side to the driven pulley side.

According to a further preferred embodiment of the invention, a scooter type motorcycle is provided with a continuously variable transmission as described above.

Further preferred embodiments are subject to the subclaims.

In the following, the invention will be described in greater detail by means of an embodiment with reference to the accompanying drawings, wherein:

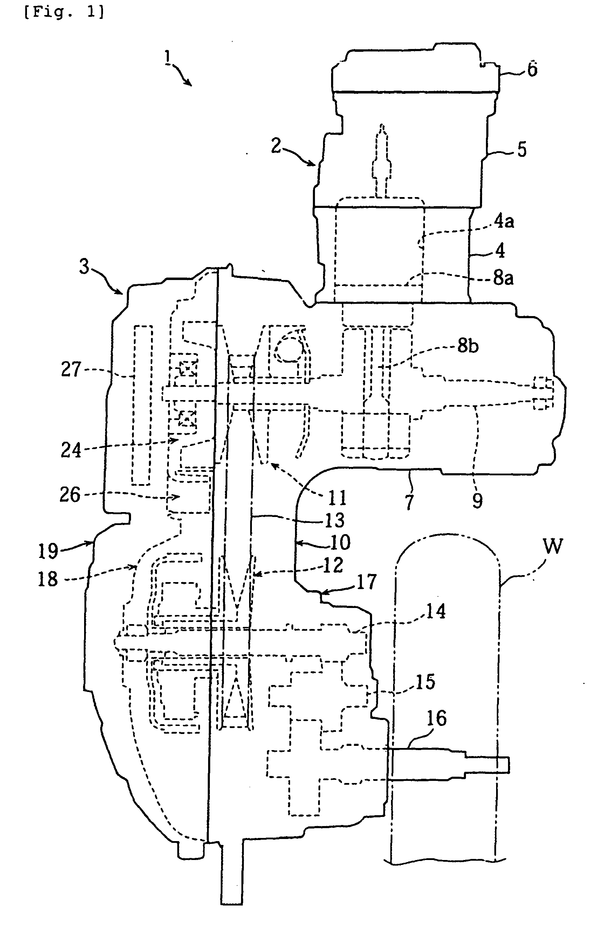

- Fig. 1: is a plan view of an engine unit provided with a cooling structure for a V belt continuously variable transmission according to an embodiment of the present invention;
- Fig. 2: is a sectional plan view of a transmission portion of the embodiment;
- Fig. 3: is a side view showing a case body of a transmission case of the embodiment;
- Fig. 4: is a side view showing a case cover of the transmission case;
- Fig. 5: is a side view showing a resin cover of the transmission case;

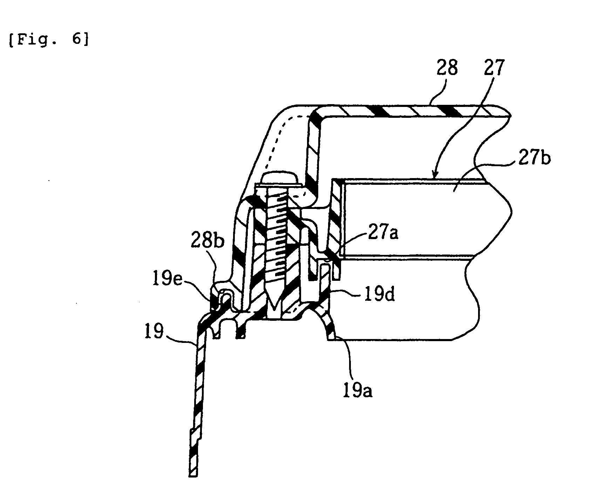

- Fig. 6: is a sectional side view showing a state in which an element is attached of the embodiment (a sectional view along line VI-VI in Fig. 5);
- Fig. 7: is a sectional plan view on a driven pulley side of the transmission;
- Fig. 8: is a main part enlarged sectional view of the driven pulley;
- Fig. 9: is a side view of a movable pulley half body of the driven pulley;
- Fig. 10: is a sectional view of the movable pulley half body (a sectional view along line X-X in Fig. 9);
- Fig. 11: is a side view of a conventional general driven pulley;
- Fig. 12a: is a side view of another conventional general driven pulley; and
- Fig. 12b: is a sectional view of the conventional pulley along line b-b in Fig. 12a.

In the following description of this embodiment, front and rear as well as left and right mean the front and rear as well as the left and right in the case in which the engine unit is mounted to a vehicle such as, e.g. a scooter type motorcycle, and viewed in a state in which a person such as, e.g. a driver, sits on a seat of such a vehicle.

In the figures, reference numeral 1 denotes a unit swing type engine unit for a scooter type motorcycle. The engine unit 1 is formed by integrating an engine body 2 and a V-belt type continuously variable transmission 3 and is supported so as to be able to swing vertically in substantially a central part of an under bone type body frame (not shown).

The engine body 2 is arranged with a cylinder shaft oriented substantially in a horizontally front direction, and has a schematic structure in which a cylinder block 4 and a cylinder head 5 are stacked and fastened to a front wall of a crankcase 7 made of aluminum alloy and a head cover 6 is detachably mounted to a front side interface of the cylinder head 5. A piston 8a inserted and arranged in a cylinder bore 4a, which is formed in the cylinder block 4, so as to slide freely is coupled to a crankshaft 9, which is arranged so as to be oriented in a vehicle width direction in the crankcase 7, by a connection rod 8b.

The continuously variable transmission 3 is a continuously variable transmission in which a transmission body is housed in a transmission case 10 extending rearward on a vehicle left side from a left side part of the engine body 2. The transmission body has a schematic structure constituted by winding a V belt 13 around a drive pulley 11, which is mounted to a left end of the crankshaft (drive shaft) 9 located on the engine body 2 side in the transmission case 10, and a driven pulley 12, which is mounted to a driven shaft 14 located on a rear wheel W side. Note that rotation of the driven shaft 14 is transmitted to a rear wheel shaft 16 via an intermediate shaft 15 arranged in a gear chamber 20 while being decelerated according to a gear ratio of respective gears 14b, 15a, 15b, and 16a.

The transmission case 10 includes a case body 17 which is formed integrally with the crankcase 7 and extends to the rear wheel shaft 16, a case cover 18 made of aluminum alloy which is detachably mounted on an outer side (left side) of the case body 17, and a resin cover 19 which covers an external surface of the case cover 18. Note that, in a rear part of the case body 17, the oil-tight gear chamber 20 is formed by swelling out a rear inner wall 17a of the case body 17 to the rear wheel W side and mounting an inner cover 17b on an inner side of the swelled portion.

A left journal section 9e of the crankshaft 9 is pivotally supported by a left wall 7a of the crankcase 7 via a bearing 21b. A pulley support section 9a, which is further on the left side than the left journal section 9e, projects into the transmission case 10a. A tip of the pulley support section 9a is pivotally supported by a bearing boss section 18a of the case cover 18 via a bearing 21a and a spacer 9c.

Here, the bearing boss section 18a supporting the tip of the crankshaft 9 includes an annular ring portion 18c, which supports the bearing 21a, and three legs 18d, which combine and hold the ring portion 18c integrally with a part of the case cover 18 which forms a bottom wall of a blast casing 26 to be described later.

In addition, the drive pulley 11 is mounted to the pulley support section 9a of the crankshaft 9. The drive pulley 11 includes a movable pulley half body 11a which is mounted to a slide pipe 11c, which is disposed in the pulley support section 9a so as to rotate therewith, so as to be able to slide in an axial direction thereof and rotate therewith, and a fixed pulley half body 11b which is tightened and fixed to the pulley support section 9a by a nut 9b so as to come into abutment against a tip of the slide pipe 11c. Note that reference sign 9d denotes a spacer which fills a gap in the axial direction between the spacer 9c and the fixed pulley half body 11b. These are tightened and fixed to the pulley support section 9a by the nut 9b.

In addition, a weight 11e is provided between a cam plate 11d, which is disposed on a back surface of the movable pulley half body 11a, and a stopper plate 11f, which is fixed to the pulley support section 9a. As a rotation speed of the crankshaft 9 increases, the weight 11e is moved to an outer side in the radial direction by a centrifugal force to move not only the cam plate 11d but also the movable pulley half body 11a. Consequently, an effective diameter of the drive pulley 11 increases, and a vehicle is sped up.

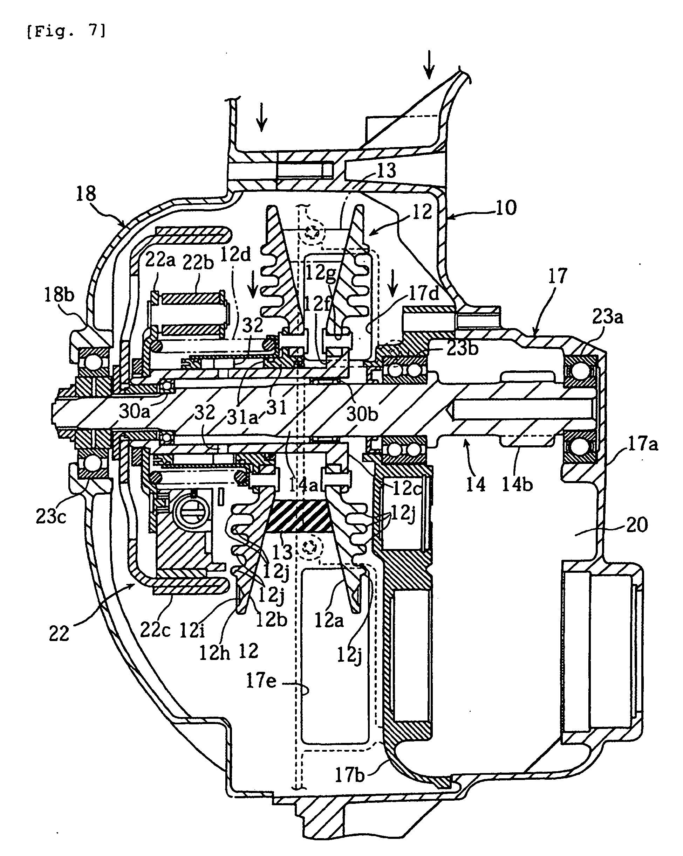

As shown mainly in Fig. 7, the driven pulley 12 is mounted to a pulley support section 14a projecting into the transmission case 10 from the gear chamber 20 of the driven shaft 14, and includes a fixed pulley half body 12a, which is disposed in the pulley support section 14a so as to rotate freely and be unable to move in the axial direction, and a movable pulley half body 12b, which is disposed so as to move freely in the axial direction. Note that the driven shaft 14 is pivotally supported in a portion on the gear chamber 20 side by the inner wall 17a and the inner cover 17b via the bearings 23a and 23b. In addition, a tip portion thereof is pivotally supported by a rear wall 18b of the case cover 18 via a bearing 23c.

A cylindrical slide collar 12c is fixed to an axis part of the fixed pulley half body 12a. The slide collar 12c is mounted to the driven shaft 14 via bearings 30a and 30b so as to rotate freely relative to the driven shaft 14. A cylindrical boss section 31, which is fixed to an axis part of the movable pulley half body 12b, is mounted on this slide collar 12c so as to be able to move in the axial direction.

In addition, a biasing spring 12d is disposed between the boss section 31 and a weight arm 22a of a centrifugal clutch 22, which is described later. The movable pulley half body 12b is biased by the biasing spring 12b in a direction in which an effective diameter of the driven pulley 12 increases.

Plural slide grooves 31a extending in the axial direction are formed in the boss section 31. Guide pins 32, which are fastened to the slide collar 12c, are in engagement with the slide grooves 31a. Consequently, the movable pulley half body 12b rotates with the fixed pulley half body 12a.

The centrifugal clutch 22 is provided between an outer end of the slide collar 12c and an outer end of the driven shaft 14. This centrifugal clutch 22 has a structure in which the weight arm 22a is locked to a tip of the slide collar 12c, a weight 22b is mounted to the weight arm 22a so as to be able to swing in a radial direction around an axis which is parallel to the driven shaft 14, and a bowl-like outer drum 22c is fixed on the driven shaft 14 side. As a rotation speed of the driven pulley 12 increases, the weight 22b expands outward in the radial direction to come into abutment against an internal circumferential surface of the outer drum 22c, whereby the rotation of the driven pulley 12 is transmitted to the driven shaft 14.

Next, a cooling structure on a drive pulley 11 side of the continuously variable transmission 3 will be described.

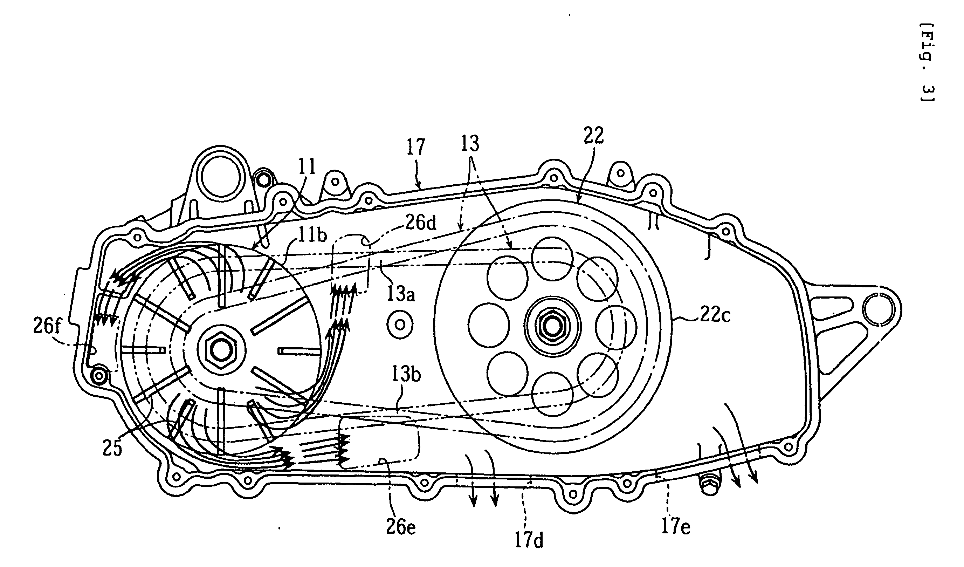

On an outer side in an axial direction of the drive pulley 11 of the crankshaft 9, there is disposed a blast fan 24, which introduces the air into the transmission case 10 from a front part thereof, boosts and blows the air to portions requiring the air, and exhausts the air from a rear part thereof. This blast fan 24 is a fan with a schematic structure in which the periphery of a large number of blast vanes 25 is surrounded by the blast casing 26. Note that the blast fan 24 of this embodiment rotates in a counterclockwise direction viewed from the left of the vehicle (the state shown in Fig. 3).

The blast vanes 25 are integrally formed on an outer surface of the fixed pulley half body 11b so as to take a radial shape at a predetermined equiangular interval viewed in the axial direction. The respective blast vanes 25 are formed such that a part on the center side is deleted when the blast vanes are viewed in an axial perpendicular direction and only a part near an external circumferential edge of the fixed pulley half body 11b is erected to an outer side in the axial direction. A ring portion 18c of the bearing boss section 18a is located in the deleted part, whereby expansion of dimensions in the vehicle width direction due to provision of the blast fan 24 is avoided.

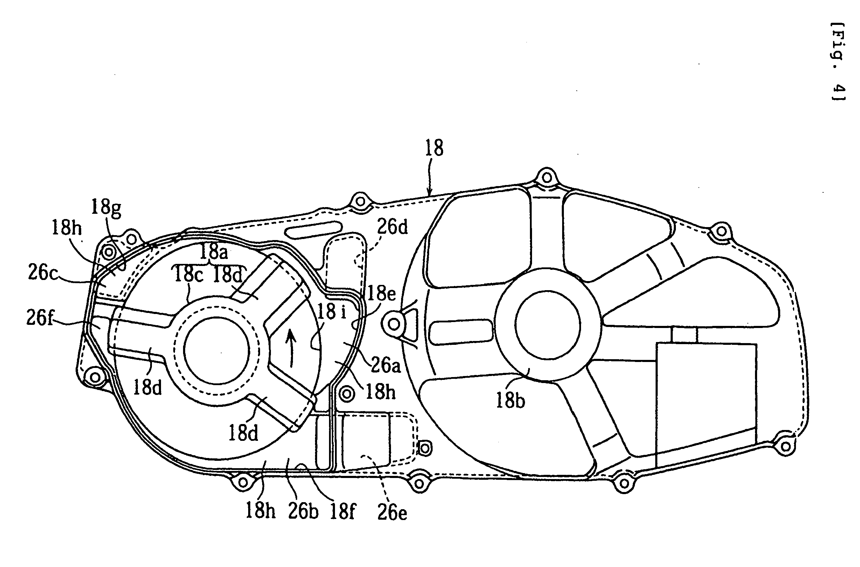

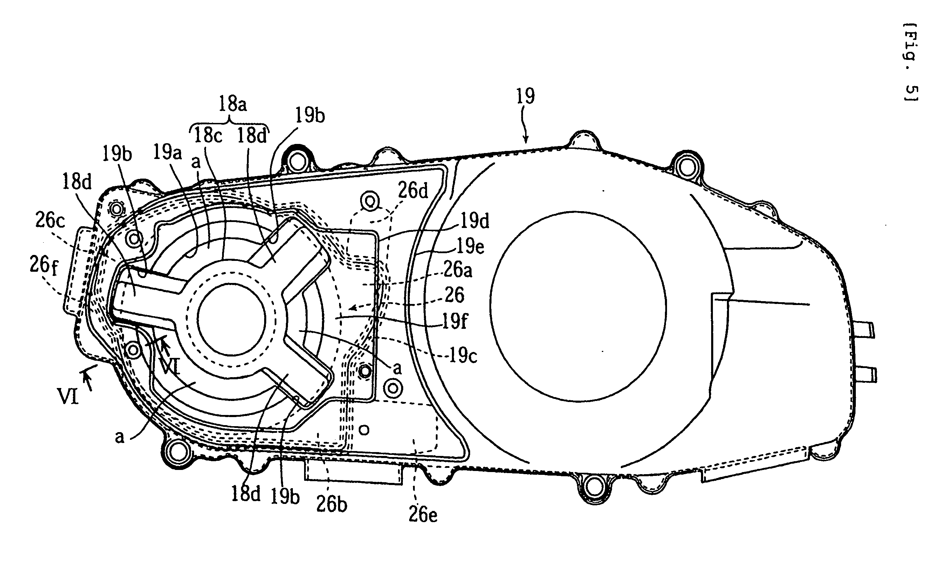

As shown in Figs. 4 and 5, the blast casing 26 has plural sets (three sets in this embodiment) of boost pressure passages 26a, 26b, and 26c which are formed so as to have a wider gap between the blast vanes 25 and the boost pressure passages further on a downstream side in a rotation direction. Discharge ports 26d, 26e, and 26f are formed at a downstream end of the respective boost pressure passages 26a to 26c.

Here, as shown in Fig. 3, the discharge ports 26d and 26e of the boost pressure passages 26a and 26b at the upper rear part and the lower rear part are arranged so as to be located substantially in the middle between the drive pulley 11 and the driven pulley 12 and generally opposed to the V belt 13 in the parts from the outer side. More specifically, the discharge ports 26d and 26e are formed so as to generally take a rectangular shape, and the discharge port 26d on the upper side is arranged such that a long side of the rectangular intersects the V belt 13. On the other hand, the discharge port 26e on the lower side is arranged such that a long side thereof is substantially parallel to the V belt 12 and a part thereof overlaps the V belt 12.

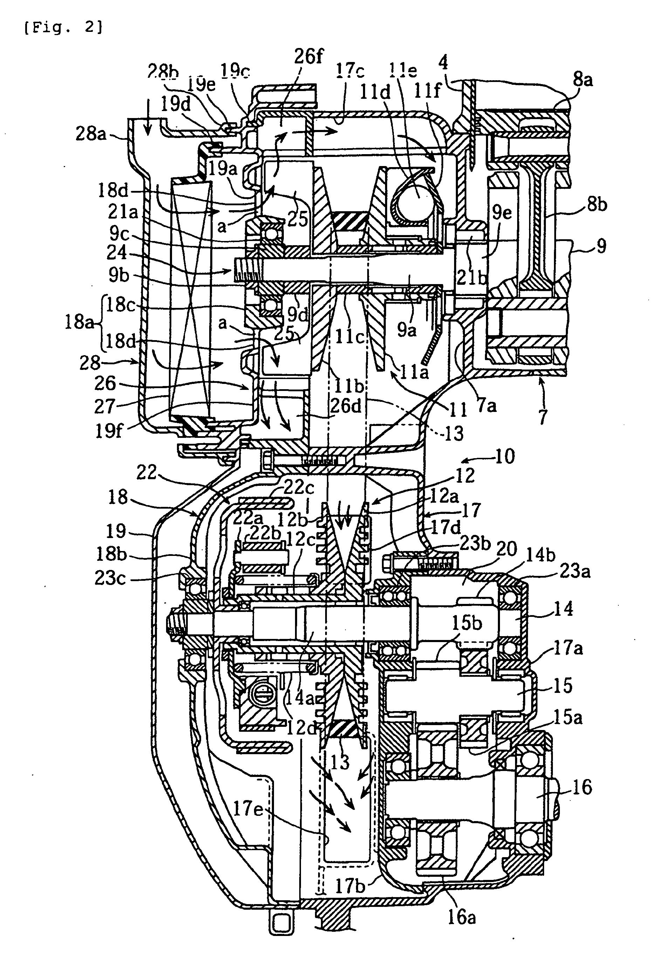

In addition, the discharge port 26f of the boost pressure passage 26c on the front side thereof is formed so as to discharge cooling wind toward the inner side in the axial direction from a front side edge. The cooling wind discharged from the discharge port 26f is supplied to a back side of the movable pulley half body 11a through a guide passage 17c (see Fig. 2) formed at a front end of the case body 17.

Here, in Fig. 3, an idling state (reduction ratio is the maximum) and a maximum speed state (reduction ratio is the minimum) of the V belt 13 are indicated by an alternate long and short dash line and an alternate long and two short dashes line, respectively. As is evident from the figure, positions of portions 13a and 13b, which are located substantially in the middle of the drive and driven pulleys 11 and 12 of the V belt 13, rarely change in both the idling state and the maximum speed state. Further, in this embodiment, the discharge ports 26d and 26e are arranged so as to be directed to the portions 13a and 13b, positions of which rarely change in both the idling state and the maximum speed state, of the V belt 13. Consequently, the cooling air can be always blown on the V belt 13 without increasing a size of the discharge ports 26 and 26e so much, that is, while keeping a discharge speed of the cooling air high.

The boost pressure passages 26a to 26c are constituted by external circumferential sections 18e to 18g and a bottom wall 18h which are formed in the case cover 18, and a top wall 19f which is formed in the resin cover 19. More specifically, the external circumferential sections 18e to 18g forming circumferential edges of the respective boost pressure passages 26a to 26c are formed in the case cover 18 such that the gaps between the external circumferential sections and the blast vanes 25 become larger further on a downstream side in a rotating direction of the drive pulley 11, that is, such that the external circumferential sections generally form tangent lines of the external circumference of the drive pulley 11. In addition, a portion remaining after forming an opening 18i according to a rotation locus of the blast vanes 25 is the bottom wall 18h. Note that, naturally, the external circumferential sections 18e to 18g forming the boost pressure passage of the case cover 18 are continuous and forms a closed loop as a whole. A seal groove 19c, which is formed on an inner surface of the resin cover 19 so as to take the same shape, fits in this closed loop to seal both of them.

In a portion which is in the closed loop 19c of the resin cover 19 and opposed to the drive pulley 11, an opening 19a, which has a diameter larger than the ring portion 18c of the bearing boss section 18a, and a notch 19b, which prevents interference with the legs 18d, are formed. A slit-like space "a" formed between the opening 19a and the ring portion 18c serves as an air passage.

In addition, an element seal rib 19d of a closed loop shape, which surrounds the legs 18d of the ring portion 18c, is integrally formed on an external side of the resin cover 19. Further, a cover seal rib 19e of a closed loop shape, which surrounds the outside of the element seal rib 19d, is integrally formed thereon.

A seal groove 27a, which is formed on an inner surface of an air cleaner element 27, is fit in and mounted to the element seal rib 19d. In addition, a seal groove 28b of an air cleaner cover 28, which covers the air cleaner element 27 from the outside, is fit in and mounted to the cover seal rib 19e.

The element 27 is an element in which a rectangular element body 27b is arranged in a part surrounded by the annular seal groove 27a. The air is introduced into the blast fan 24 side from a suction port 28a of the air cleaner cover 28 through the element body 27b and further through the slit-like space "a". The air is boosted by rotation of the blast vanes 25, discharged toward the middle portions 13a and 13b, positions of which rarely change, of the V belt 13 from the discharge ports 26d and 26e through the boost pressure passages 26a to 26c, and supplied toward the back side of the movable pulley half body 11a from the discharge port 26f through the guide passage 17c, and flows to the driven pulley 12 side through the transmission case 10.

In this embodiment, the blast casing 26, which surrounds the blast vanes 25 provided in the fixed pulley half body 11b of the drive pulley 11, is provided on the transmission case 10 side, and the blast casing 26 has the boost pressure passages 26a to 26c, which are constituted by forming the blast casing 26 such that the gap between the ballast casing 26 and the blast vanes 25 is wider further on the downstream side in the rotation direction, and the discharge ports 26d to 26f are formed at the downstream end of the respective boost pressure passages 26a to 26c. Thus, cooling air is boosted while flowing through the boost pressure passages 26a to 26c according to the rotation of the blast vanes 25, discharged from the discharge ports 26d to 26f, a blasting efficiency increases, and an amount of cooling air can be increased significantly.

Then, the discharge ports 26d and 26e of the boost pressure passages 26a and 26b in the upper rear part and the upper lower part are formed so as to discharge the cooling air toward the V belt 13. Thus, the V belt 13 under thermally severe conditions can be cooled surely.

Moreover, the discharge ports 26d and 26e are formed so as to discharge cooling air toward the vicinity of the middle portions 13a and 13b, which intersect each other in both the idling state and the maximum speed state, of the V belt 13. Thus, the cooling air can be supplied to the V belt 13 in all operation ranges without increasing a size of the discharge ports 26d and 26e, that is, while securing a discharge flow speed of the cooling air. The V belt 13 can also be cooled surely from this point.

In addition, cooling air, which is discharged from the discharge port 26f of the boost pressure passage 26c on the front side, is supplied toward the back surface of the movable pulley half body 11a, which is located inside the transmission case of the drive pulley 11, through the guide passage 17c. Thus, the cooling air can be supplied to a portion of the drive pulley 11 which will have highest temperature, and temperature of the portion is prevented from rising abnormally.

In addition, in forming the blast casing 26 on the transmission case 10 side, the blast casing 26 is formed by forming the external circumference sections 18e to 18g of the boost pressure passages 26a to 26c in the case cover 18 and covering the external circumferential sections 18e to 18g with the top wall 19f of the resin cover 19. Thus, the blast casing 26 can be constituted with a simple structure which does not require special components.

In addition, the constitution is adopted in which the bearing boss section 18a, which pivotally supports the outer end of the crankshaft 9, is formed in the case cover 18, and the legs 18d of the bearing boss section 18a is combined integrally with the bottom wall 18h of the blast casing 26. Thus, the outer end of crankshaft 9 can be pivotally supported surely without increasing the number of components, although the blast casing 26 is provided.

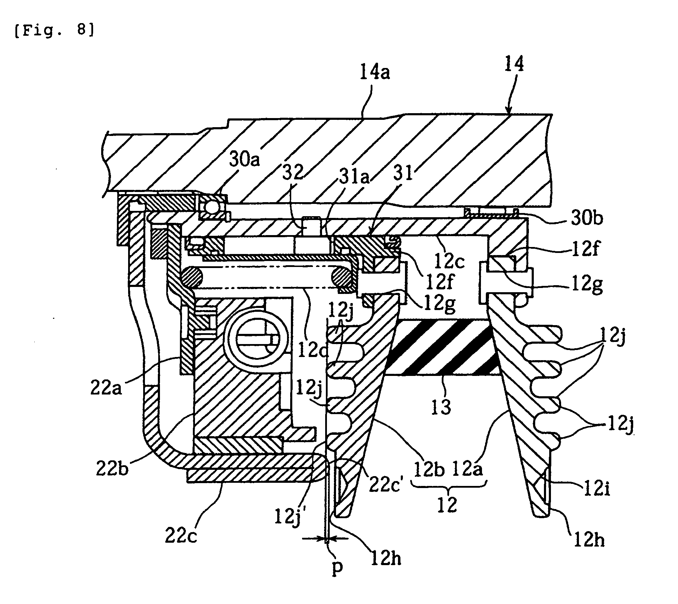

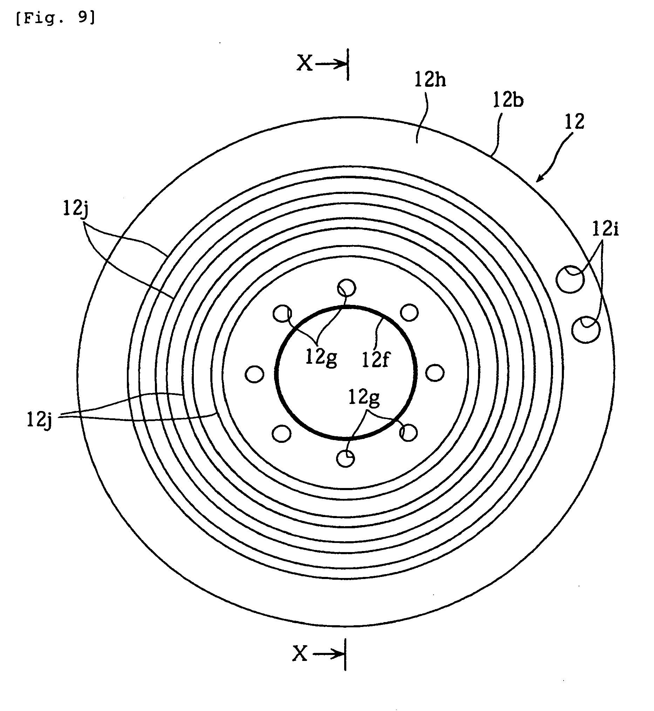

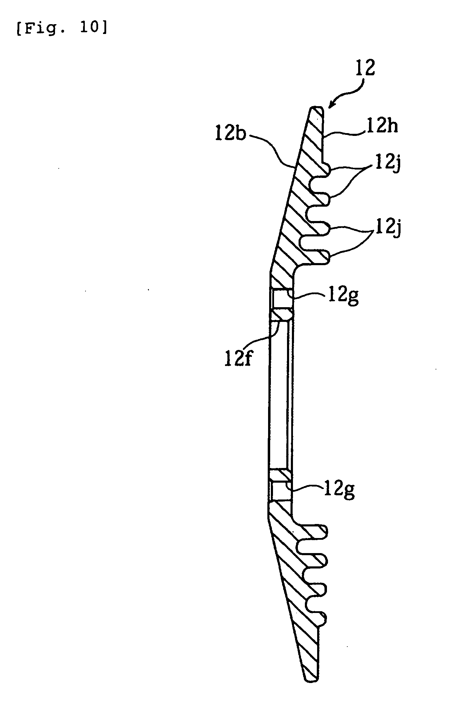

Next, the cooling structure on the driven pulley 12 side of the continuously variable transmission 3 will be described with reference to Figs. 7 to 10.

A pair of front and rear discharge ports 17d and 17e are formed on a bottom wall below the driven pulley 12 of the case body 17. The front and rear discharge ports 17d and 17e are arranged on a front side and a rear side across the driven shaft 14 viewed from a plane. The cooling air introduced into the transmission case 10 is discharged from the front and rear discharge ports 17d and 17e.

The fixed pulley half body 12a and the movable pulley half body 12b of the driven pulley 12 are generally disk-shaped half bodies consisting of aluminum die-cast and have an identical shape and an identical size. A mounting holes 12f, in which the slide collar 12c and the boss section 31 are mounted, are formed in the axis parts of the pulley half bodies 12a and 12b, and attaching holes 12g for the slide collar 12c and the boss section 31 are formed at circumferential edges of the mounting holes 12f.

Flat surfaces 12h are formed on external circumferential surfaces of the respective pulley half bodies 12a and 12b by machine work. The flat surface 12h of the movable pulley half body 12b is formed as a flank for avoiding interference with the outer drum 22c. Note that reference sign 12i is a correction hole for correcting rotation balance of the pulley half bodies 12a and 12b, and is formed if necessary.

Further, plural (four sets in this embodiment) radiation fins 12j are integrally formed on external sides located on opposite sides of belt winding surfaces of the respective pulley half bodies 12a and 12b so as to form concentric circles.

Further, circular concentric recesses are formed between said radiation fins 12j on said external surface of the driven pulley, respectively at its half bodies.

The respective radiation fins 12j are formed extending from a top position (a position indicated by a solid reference symbol line in Fig. 7), where a winding diameter of the V belt 13 is the minimum, to a low position (a position indicated by a reference symbol line consisting of an alternate long and two short dashes), where a winding diameter of the V belt 13 is the maximum. More specifically, the radiation fins 12j, which are located at an inner end in a radial direction of the respective pulley half bodies 12a and 12b, are formed in portions facing the top position of the V belt 13, and the radiation fins 12j, which are located at an outer end in the radial direction, are formed in portions facing the low position of the V belt 13. The remaining radiation fins 12j are formed between both the radiation fins.

The respective radiation fins 12j are formed so as to project further on an outer side than the flat surface 12h. Consequently, outer end faces 12j'in an axial direction of the respective radiation fins 12j on the movable pulley half body 12b side are located further on an inner side in the axial direction by p than an inner end face 22c' of the outer drum 22c when the pulley half body 12b has moved to the top position.

In addition, although the outer end faces 12j' of the respective radiation fins 12j are in an identical position, since the belt winding surface is inclined such that a part thereof further on an inner side in the radial direction is located further on an inner side in the axial direction, a substantial height thereof is larger in a part further on the top position (inner side in the radial direction) side.

According to the cooling structure of this embodiment, the plural radiation fins 12j are formed on the external sides of the respective pulley half bodies 12a and 12b of the driven pulley 12 so as to take substantially a concentric shape extending in the circumferential direction. Thus, rigidity of the pulley half bodies 12a and 12b can be secured, and the radiation fins 12j can be prevented from becoming resistance to cooling air flowing from the drive pulley 11 side to the driven pulley 12 side or disturbing the flow of the cooling air, and a cooling effect of the V belt 13 can be improved.

The radiation fins 12j, which are located at an inner end in the radial direction of the respective pulley half bodies 12a and 12b, are formed in the portions facing the top position of the V belt 13 and so as to be the highest. Thus, heat from the top position part, where a heat load is the largest, can be radiated effectively, and a radiation property of the respective pulley half bodies 12a and 12b can be improved.

In addition, the respective radiation fins 12j are arranged extending from the low position to the top position of the V belt 13. Thus, the radiation property of the respective pulley half bodies 12a and 12b can be improved in all operation ranges from the idling state to the maximum speed state, and the V belt 13 can be cooled efficiently.

In this embodiment, the respective radiation fins 12j are formed such that the outer end faces 12j' are located further on an inner side by p than the inner end face 22c' of the outer drum 22c. Thus, an amount of projection of the respective radiation fins 12j can be increased to increase a surface area thereof without interfering with the outer drum 22c. The radiation property can also be improved from this point.

As described before, a cooling structure for a V- belt type continuously variable transmission is provided which can prevent turbulence of cooling air introduced into a transmission case, such to increase a cooling effect for a V-belt. Such a V-belt type continuously variable transmission having a cooling structure is adapted to flow cooling air, which is introduced into a transmission case, from a drive pulley side to a driven pulley side. It comprises plural radiation fins 12j which are formed on external surfaces on opposite sides of belt winding surfaces of respective pulley half bodies 12a and 12b of a driven pulley 12 so as to form substantially a concentric circle.

Such a continuously variable transmission may be used as part of the drive structure of any motorized vehicle such as for example a scooter type vehicle, an automotive vehicle or a snow vehicle.

## Claims

1. Continuously variable transmission having a V-belt (13) wound around a drive pulley (11) and a driven pulley (12),
**characterized in that**
plural radiation fins (12j) are formed in substantially concentric circles on an external surface of the driven pulley (12), and
circular continuous recesses are formed in substantially concentric circles between said radiation fins (12j) on the external surface of the driven pulley (12).

2. Continuously variable transmission according to claim 1, **characterized in that** said radiation fins (12j) extend parallel to one another in an axial direction on the external surface of a side opposite to a V-belt winding surface of the driven pulley (12).

3. Continuously variable transmission according to claim 1 or 2, **characterized in that** at least one of the radiation fins (12j) is formed in a part of the driven pulley (12) facing a top position where a winding diameter of the V belt (13) is the minimum.

4. Continuously variable transmission according to at least one of the claims 1 to 3, **characterized in that** the radiation fins (12j) are formed concentrically to one another between a radially outermost low position, where a winding diameter of the V-belt (13) is the maximum, and a radially innermost top position, where a winding diameter of the V-belt (13) is the minimum.

5. Continuously variable transmission according to at least one of the claims 1 to 4, **characterized in that** an axial extension or height of the radiation fins (12j) is larger the closer the radiation fins (12j) are located to a radially innermost top position, where a winding diameter of the V-belt (13) is the minimum.

6. Continuously variable transmission according to at least one of the claims 1 to 5, **characterized in that** a centrifugal clutch (22) is mounted on a movable pulley half body (12b) side of the driven pulley (12) on the driven shaft (14) so as to be adjacent thereto, and an outer end face of the radiation fins (12j) is formed so as to substantially coincide with an inner end face of an outer drum (22c) of the centrifugal clutch (22) or to be located in the outer drum (22c) when the movable pulley half body (12b) has moved to a top position, where a winding diameter of the V-belt (13) is the minimum.

7. Continuously variable transmission according to at least one of the claims 1 to 6, **characterized in that** said drive pulley (11) is mounted to a drive shaft (9) located on an engine side in a transmission case (10), and said driven pulley (12) is mounted to a driven shaft (14) located on a rear wheel side, wherein cooling air introduced into the transmission case (10) is directed from the drive pulley side to the driven pulley side.

8. Scooter type motorcycle **characterized by** comprising a continuously variable transmission according to at least one of the claims 1 to 7.

## Patentansprüche

1. Stufenlos veränderbares Getriebe mit einem Keilriemen (13), gewickelt rund um eine Antriebsriemenscheibe (11), und eine angetriebene Riemenscheibe (12),
**dadurch gekennzeichnet, dass**
mehrere Abstrahlungsrippen (12j) in im Wesentlichen konzentrischen Kreisen auf einer äußeren Oberfläche der angetriebenen Riemenscheibe (12) gebildet sind, und
kreisförmig fortlaufende Aussparungen in im Wesentlichen konzentrischen Kreisen zwischen den Abstrahlungsrippen (12j) auf der äußeren Oberfläche der angetriebenen Riemenscheibe (12) gebildet sind.

2. Stufenlos veränderbares Getriebe nach Anspruch 1, **dadurch gekennzeichnet, dass** sich die Abstrahlungsrippen (12j) parallel zueinander in einer axialen Richtung auf der äußeren Oberfläche einer Seite, gegenüberliegend zu einer Keilriemenumschlingungsoberfläche der angetriebenen Riemenscheibe (12), erstrecken.

3. Stufenlos veränderbares Getriebe nach Anspruch 1 oder 2, **dadurch gekennzeichnet, dass** zumindest eine der Abstrahlungsrippen (12j) in einem Teil der angetriebenen Riemenscheibe (12) gebildet ist, die einer oberen Position zugewandt ist, wo ein Umschlingungsdurchmesser des Keilriemens (13) das Minimum ist.

4. Stufenlos veränderbares Getriebe nach zumindest einem der Ansprüche 1 bis 3, **dadurch gekennzeichnet, dass** die Abstrahlungsrippen (12j) konzentrisch zueinander gebildet sind zwischen einer radial außenliegends unteren Position, wo ein Umschlingungsdurchmesser des Keilriemens (13) maximal ist, und einer radial innersten oberen Position, wo ein Umschlingungsdurchmesser des Keilriemens (13) minimal ist.

5. Stufenlos veränderbares Getriebe nach zumindest einem der Ansprüche 1 bis 4, **dadurch gekennzeichnet, dass** eine axiale Verlängerung oder die Höhe der Abstrahlungsrippen (12j) größer ist, je näher die Abstrahlungsrippen (12j) zu einer radial innersten oberen Position angeordnet sind, wo der Umschlingungsdurchmesser des Keilriemens (13) minimal ist.

6. Stufenlos veränderbares Getriebe nach zumindest einem der Ansprüche 1 bis 5, **dadurch gekennzeichnet, dass** eine Zentrifugalkupplung (22) auf der Seite eines bewegbaren Riemenscheibenhalbkörpers (12b) der angetriebenen Riemenscheibe (12) auf der angetriebenen Welle (14) montiert ist, um zu diesem benachbart zu sein, und eine äußere Endfläche der Abstrahlungsrippen (12j) gebildet ist, um im Wesentlichen mit der inneren Endfläche einer Außentrommel (22c) der Zentrifugalkupplung (22) übereinzustimmen, oder um in der Außentrommel (22c) angeordnet zu sein, wenn sich der bewegbare Riemenscheibenhalbkörpers (12b) in eine obere Position bewegt hat, wo ein Umschlingungsdurchmesser des Keilriemens (13) minimal ist.

7. Stufenlos veränderbares Getriebe nach zumindest einem der Ansprüche 1 bis 6, **dadurch gekennzeichnet, dass** die Antriebsriemenscheibe (11) an einer Antriebswelle (9), angeordnet auf einer Motorseite in einem Getriebegehäuse (10), montiert ist und die angetriebenen Riemenscheibe (12) an einer angetriebenen Welle (14), angeordnet auf einer Hinterradseite, montiert ist, wodurch Kühlluft, eingeleitet in das Getriebegehäuse (10), von der Seite der Antriebsriemenscheibe zu der Seite der angetriebenen Riemenscheibe gerichtet ist.

8. Motorrad vom Roller- Typ, **gekennzeichnet durch** Aufweisen eines stufenlos veränderbares Getriebes nach zumindest einem der Ansprüche 1 bis 7.

## Revendications

1. Transmission à variation continue comportant une courroie en V (13) enroulée autour d'une poulie d'entraînement (11) et d'une poulie entraînée (12),
**caractérisée en ce que**
plusieurs ailettes de rayonnement (12j) sont formées en cercles sensiblement concentriques sur une surface externe de la poulie entraînée (12), et
des évidements circulaires continus sont formés en cercles sensiblement concentriques entre lesdites ailettes de rayonnement (12j), sur la surface externe de la poulie entraînée (12).

2. Transmission à variation continue selon la revendication 1, **caractérisée en ce que** lesdites ailettes de rayonnement (12j) s'étendent de manière parallèle les unes aux autres suivant une direction axiale sur la surface externe d'un côté opposé à une surface d'enroulement pour courroie en V de la poulie entraînée (12).

3. Transmission à variation continue selon la revendication 1 ou 2, **caractérisée en ce qu'**au moins l'une des ailettes de rayonnement (12j) est formée dans une partie de la poulie entraînée (12) qui fait face à une position supérieure à laquelle un diamètre d'enroulement de la courroie en V (13) a la valeur minimale.

4. Transmission à variation continue selon au moins l'une des revendications 1 à 3, **caractérisée en ce que** les ailettes de rayonnement (12j) sont formées de manière concentrique entre une position inférieure radialement la plus extérieure, dans laquelle un diamètre d'enroulement de la courroie en V (13) a la valeur maximale, et une position supérieure radialement la plus intérieure, à laquelle un diamètre d'enroulement de la courroie en V (13) a la valeur minimale.

5. Transmission à variation continue selon au moins l'une des revendications 1 à 4, **caractérisée en ce que** plus une extension axiale ou une hauteur des ailettes de rayonnement (12j) est grande, plus les ailettes de rayonnement (12j) sont proches d'une position supérieure radialement la plus intérieure, pour laquelle un diamètre d'enroulement de la courroie en V (13) a la valeur minimale.

6. Transmission à variation continue selon au moins l'une des revendications 1 à 5, **caractérisée en ce qu'**un embrayage centrifuge (22) est monté sur un côté du demi-corps de poulie mobile (12b) de la poulie entraînée (12) sur l'arbre entraîné (14) de manière à y être adjacent, et une face d'extrémité extérieure des ailettes de rayonnement (12j) est formée de manière à coïncider sensiblement avec une face d'extrémité intérieure d'un tambour extérieur (22c) de l'embrayage centrifuge (22) ou à être située dans le tambour extérieur (22c) lorsque le demi-corps de poulie mobile (12b) s'est déplacé à une position supérieure, dans laquelle un diamètre d'enroulement de la courroie en V (13) a la valeur minimale.

7. Transmission à variation continue selon au moins l'une des revendications 1 à 6, **caractérisée en ce que** ladite poulie d'entraînement (11) est montée sur un arbre d'entraînement (9) situé sur un côté du moteur dans un carter de transmission (10), et ladite poulie entraînée (12)est montée sur un arbre entraîné (14) situé sur un côté de roue arrière, dans laquelle l'air de refroidissement introduit dans le carter de transmission (10) est dirigé du côté de la poulie d'entraînement vers le côté de la poulie entraînée.

8. Motocyclette de type scooter, **caractérisée en ce qu'**elle comprend une transmission à variation continue selon au moins l'une des revendications 1 à 7.
